# EUROPEAN PATENT APPLICATION

(11) **EP 4 227 543 A1**
(43) Date of publication of application: **16.08.2023**
(21) Application number: 22155964.4
(22) Date of filing: 09.02.2022
(51) Int. Cl.: F15B 15/14, F15B 15/22

(54) **ACTUATION DEVICE**

(71) Applicant: MSD S.r.l., 34170 Gorizia (IT)
(72) Inventor: GHIOTTI, Andrea, 35121 PADOVA (IT); FILIPPI, Stefano, 36036 TORREBELVICINO VI (IT)
(74) Representative: Morabito, Sara

(57) **Abstract**

An actuation device (10, 110), of the type using magnetorheological fluid, which comprises at least the combination of:
- a jacket (11, 111),
- a tubular bushing (12, 112), which is internal to the jacket (11, 111) and is concentric thereto, electrical windings (13, 113) being present on the external wall of the bushing (12, 112), the jacket (11, 111) being closed at one end by an end plate (14, 114) and at the opposite end by a head (16, 116) which is perforated for the passage of
- a first hollow stem (17, 117), adapted to protrude from the head (16, 116) by translating on
- a second hollow stem (18, 118), which extends from the end plate (14, 114) inside the bushing (12, 112),
- an annular element (19, 119), which is integral with the first hollow stem (17, 117) and translates with it inside the bushing (12, 112),
- a first chamber (20, 120), adapted to contain the magnetorheological fluid,
- a second chamber (21, 121), in fluidic connection with the first chamber (20, 120) by means of an interspace (22, 122) between the bushing (12, 112) and the jacket (11, 111),
- a third volume compensation chamber (23, 123).

## Description

The present invention relates to an actuation device.

The device finds its application, particularly but not exclusively, in the industrial sector of machine tools such as presses, for example for deformation or blanking operations, in dies and die components (for example sheet pressers), or generally in machines requiring the damping of dynamic phenomena (vibrations) or the application of dissipative forces.

The device is of the double-acting type and is adapted to work both as an actuator of the semi-active type and as one of the active type. The expression active actuator is understood here to mean a device that makes it possible to exert a force on the system to which it is connected by virtue of the supply of external energy applied at strategic points thereof, in the form of a force that is independent of the system that generates the movement of the device. The expression semi-active actuator is understood here to mean a device adapted to apply a force to the system to which is connected without the input of external energy, such that the force is generated as a reaction to the behavior of the system, but can be adjusted during operation when necessary.

In the industry, the expression "double-acting devices" is understood to mean cylinders that have two chambers in which the pressurized fluid is caused to act alternately, so as to utilize its thrust both during the working stroke of the stem and during the repositioning stroke.

It is known to use damping devices inside presses, for example in aid of dies or die components. During a drawing operation, since the area on which the sheet presser (designed to prevent the formation of wrinkles on the metal sheet) acts decreases as the metal sheet slides progressively into the die and, generally, in a different way during the pressing stroke, the force is required to follow a particular rule as a function of the pressing stroke, typically a decreasing one.

Again, during a pressing process eccentric loads can be generated which lead to an overload of the guides and an error in the alignment of the dies to the detriment of the precision of the pressed component.

In a blanking process, when a fracture appears there is an instantaneous release of energy stored in the structure of the press during the process, which leads to noises, vibrations and consequent possible damage to mechanical or hydraulic components, which make a preventive oversizing of the dies or of the machines themselves necessary.

In the case of a press, the sheet presser ring is adapted to transmit a force to the metal sheet in contrast to the movement of the upper die part of the press. The sheet presser is supported by rods, which are in turn supported by a sheet presser pad. In the most common press construction, the lower table, with the lower die part, is fixed, while a slider pushes the sheet presser. The pad, also known in the industry as a "pan", is mounted on actuators, known in the industry as sheet presser pistons, which act against the downward movement of the slider.

Currently, pneumatic cylinders connected to air tanks are often used for the above purpose. During the stroke of the slider, the air is compressed, ensuring the required force to the sheet presser (passive step) and the subsequent rise (active step). Force adjustment is limited to initial pressure adjustment.

These have a series of significant drawbacks, including the fact that:
- the reaction force is not constant but increases during the pressing stroke, therefore in the opposite manner to what is generally required;
- since it is not possible to control the rising step, in case of seizure or damage the presence of residual pressures may lead to uncontrolled movements of the sheet presser when the problem is solved and any venting of the pressure would require times that are not compatible with those necessary for the prevention of accidents;
- large space occupations;
- generation of damaging inverse loads acting on the mechanical elements, in mechanical presses, which require a braking action by the motor of the machine, with consequent energy dissipation and thermal overload of said motor,
- in hydraulic presses, in order to control the return movement of the sheet presser a braking action on the stem is required to limit the rising speed, with consequent energy dissipation and increase in the press work cycle time.

Other sheet presser cylinders are actuated hydraulically. In this case, with respect to the previous one, there is less space occupation and an adequate control technology (sensors, valves and control software/hardware, etcetera) which allows a modulation of the pressure in the cylinders. However, even these are not free from drawbacks, in particular due to the relatively high costs and the generation of heat to be dissipated (due to the laminar flow of the fluid).

It is also known to use nitrogen-filled cylinders (also known in the industry as "springs"), the space occupation of which is limited, especially when the tank is formed in the cylinder itself, but the limitations of pneumatic sheet presser cylinders remain.

Other solutions are constituted by:
- spring actuators, which can only be used for short strokes and small forces and are not able to absorb the vibrations that can be generated during the process;
- anti-shock devices (for blanking), i.e., oil-pressure actuators with a dissipative valve for damping vibrations, but with limited strokes because of the incompressibility of the fluid.

One possible solution is constituted by semi-active actuators using magnetorheological fluid (typically mineral oil with metal powder dispersion), in which the fluid passes between two chambers by means of calibrated passages in the piston head. The fluid changes its viscosity if it is subjected to a magnetic field, in order to generate the required resistance, which can be induced by the flow of current in cables crossing the stem, which, depending on the application, constitutes the movable or fixed part of the actuator. These devices find application in the automotive and aeronautical sectors, as vibration dampers and shock absorbers, where high performance is required, due to the reaction speed, typical of magnetorheological fluids, to current variation and therefore to the magnetic field. Currently, this solution is not adopted in machines, such as machine tools, due to limitations caused by the space occupations of the volume compensation systems, which require space and can exhibit leakages at the connections, due to the limited number of cables that can be inserted in the stem and due to technical complications caused by the passage of cables in moving parts. Furthermore, in order to obtain force levels suitable for use in machine tools and the like, it would be necessary to increase the amount of magnetized fluid and therefore the length of the stem, which must be occupied by electrical cables.

The aim of the present invention is to provide an actuation device that is capable of improving the background art in one or more of the above mentioned aspects.

Within this aim, an object of the invention is to provide an actuation device having compact dimensions, the thrust force of which, as well as the speed and the rising position of the stem of which, can be modulated quickly, easily and effectively.

Another object of the invention is to provide an actuation device capable of damping vibrations of the machine parts to which it is applied and/or to apply reaction forces in contrast to the movement of the machine parts to which it is applied, for example in order to contrast rotations of parts of pressing machines in the presence of eccentric loads or in order to control their stroke.

A further object of the invention is to provide an actuation device the thrust force of which can be modulated moment by moment.

Another object of the invention is to propose a device with which it is possible to avoid dangerous and damaging situations of instantaneous release of energy stored in the structures in which it is applied.

Yet another object of the invention is to provide a device with reduced space occupations with respect to other similar and currently known devices.

Another object of the invention is to limit energy dissipations in the machines in which it is applied and increases in the processing cycle time of the machines.

Moreover, an object of the present invention is to overcome the drawbacks of the background art in a manner that is alternative to any existing solutions.

Not the least object of the invention is to provide a device that is highly reliable, relatively easy to provide and has competitive costs.

This aim and these and other objects that will become more apparent hereinafter are achieved by an actuation device, of the type using magnetorheological fluid, characterized in that it comprises at least the combination of:
- a jacket,
- a tubular bushing, which is internal to said jacket and is concentric thereto, electrical windings being present on the external wall of said bushing, said jacket being closed at one end by an end plate and at the opposite end by a head which is perforated for the passage of
- a first hollow stem, adapted to protrude from said head by translating on
- a second hollow stem, which extends from said end plate inside said bushing, said first and second hollow stems cooperating with each other telescopically,
- an annular element, which is integral with said first hollow stem and translates with it inside said bushing,
- a first chamber, which is extended around a portion of said second hollow stem, between said end plate and said annular element, and is adapted to contain said magnetorheological fluid,
- a second chamber, which is extended around a portion of said first hollow stem and is in fluidic connection with said first chamber by means of an interspace between said bushing and said jacket,
- a third volume compensation chamber.

Further characteristics and advantages of the invention will become more apparent from the description of two preferred but not exclusive embodiments of the actuation device according to the invention, shown by way of non-limiting example in the accompanying drawings, wherein:
Figure 1 is a longitudinal sectional view of the device according to the invention, in its first embodiment, in a working configuration;
Figure 2 is a view of the device according to the invention as in Figure 1 and in another configuration;
Figure 3 is another longitudinal sectional view of the device according to the invention, again in its first embodiment and in an additional configuration;
Figure 4 is an elevation view of the bushing of the device according to the invention;
Figure 5 is a longitudinal sectional view of the device according to the invention, in its second embodiment, in a working configuration;
Figure 6 is a view of the device according to the invention as in Figure 5 and in another configuration;
Figure 7 is another longitudinal sectional view of the device according to the invention, again in the second embodiment and in the configuration shown in Figure 5.

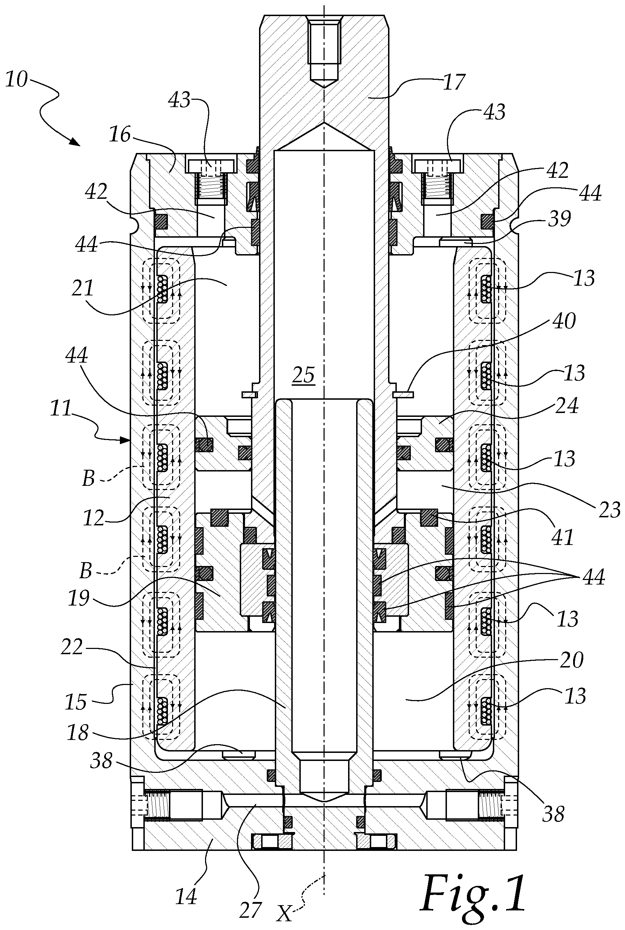

With reference to Figures 1 to 4, the actuation device according to the invention is designated by the reference numeral 10 in its first embodiment, described hereinafter, and is of the type using magnetorheological fluid.

It comprises a jacket 11 with a cylindrical shape and a tubular bushing 12, which is internal to the jacket 11 and is concentric thereto.

One of the particularities of the device 10, according to the invention, resides in the fact that there are electrical windings 13, for example electrical strips or cables, on the external wall of the bushing 12.

The jacket 11 has a substantially cup-shaped body, being closed at one end by an end plate 14 which is provided monolithically with a tubular portion 15. At the opposite end the jacket 11 is closed by a head 16 which is perforated for the passage of a first hollow stem 17.

The bushing 12 is provided with first spacers 38, substantially feet with which it rests on the end plate 14 of the jacket 11 and, on the opposite side, second spacers 39 for spacing from the head 16.

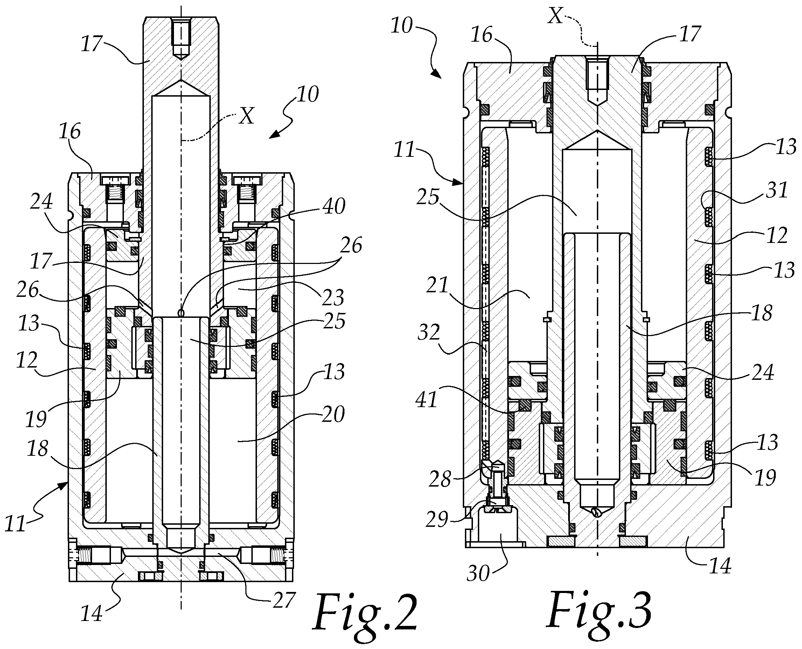

The device 10, according to the invention, comprises therefore the combination of at least the elements listed hereinafter:
- the jacket 11,
- the bushing 12,
- the first hollow stem 17, which is adapted to protrude from the head 16 by translating along a translation axis X, on
- a second hollow stem 18, which extends from the end plate 14 inside the bushing 12,
- an annular element 19, which is integral with the first hollow stem 17 and translates with it inside the bushing 12,
- a first chamber 20, which is extended around a portion of the second hollow stem 18, between the end plate 14 and the annular element 19, and is adapted to contain magnetorheological fluid,
- a second chamber 21, which is extended around a portion of the first hollow stem 17 and is in fluidic connection with the first chamber 20 by means of a calibrated interspace 22 between the bushing 12 and the jacket 11 (particularly between the lower edge of the bushing 12, for a height equal to that of the first spacers 38, and the end plate 14 and between the external tubular wall of said bushing 12 and the internal tubular wall of the jacket 11),
- a third volume compensation chamber 23 (which is visible in the configurations of Figure 1 and Figure 2).

The first hollow stem 17 and the second hollow stem 18 mutually cooperate in a telescopic manner.

The interspace 22 can be crossed by the magnetorheological fluid (in the passage from the first chamber 20 to the second chamber 21 and vice versa), which here can be affected by the magnetic field generated by the flow of current in the electrical windings 13. The intensity of the electric current flowing through the electrical windings 13 can be modulated by means of an electric power supply, both in inactive or setup steps and during the working stroke of the first hollow stem 17.

The spacers 39, by maintaining the distance between the head 16 and the upper edge of the tubular part of the bushing 12, allow the passage of the magnetorheological fluid to and from the interspace 22 and prevent the translation of said bushing 12 along the axis X. Moreover, they provide the coaxial centering of the bushing 12 with respect to the jacket 11.

The jacket 11 and the bushing 12 are made of a material permeable to magnetic fields, preferably pure iron, low carbon steel or other alloys specific for magnetic applications, thus allowing the passage and closure of the lines of force of the magnetic field generated around windings crossed by current, affecting the fluid in the interspace 22. The head 16 may be made of non-magnetic material and, in a different embodiment, the end plate 14 of the jacket also might be made of non-magnetic material.

Another important particularity resides in that the third chamber 23 extends around a portion of the first hollow stem 17, separated transversely from the second chamber 21 by means of a separation element 24.

The annular element 19 separates transversely the first chamber 20 from the third chamber 23.

The separation element 24 has an annular shape and is installed at least around a portion of the first hollow stem 17.

Such separation element 24 is adapted to translate along the same translation axis X of the first hollow stem 17 inside the bushing 12. A retaining ring 40 (for example a snap ring) is conveniently present around the first hollow stem 17 (in a groove provided for this purpose), between the head 16 and the separation element 24, which prevents it from closing on the head 16 when the stem 17 moves to the top dead center.

In this first embodiment, the second chamber 21 is comprised between the head 16 and the separation element 24, and the third chamber 23, which is an internal volume compensation chamber which undergoes a variation during the translation of the first hollow stem 17, is comprised between the annular element 19 and the separation element 24.

Figures 1 to 3 show the actuation device 10 in different configurations: the one shown in Figure 1 is an intermediate working configuration, in which the first hollow stem 17 protrudes from the head 16, in order to exert a thrust, and in which both the first chamber 20 and the second chamber 21 are present; in Figure 2, the first hollow stem 17 is at its maximum outward extension and the magnetorheological fluid is substantially located in the first chamber 20 (and obviously in the regions for connection with the other chamber), which has its maximum volume; in Figure 3 the first hollow stem 17 is at the stroke limit with the annular element 19 at the bottom dead center, in contact with the end plate 14 and the magnetorheological fluid is substantially located in the second chamber 21, which has its maximum volume, while the third chamber 23 and the first chamber 20 are empty and therefore absent in this configuration. In the transition between the various configurations, the volumes of the chambers obviously change.

The device 10 also comprises a fourth chamber 25 formed by the communicating cavities of the first hollow stem 17 and of the second hollow stem 18, which are open at a respective end. The third chamber 23 and the fourth chamber 25 are in fluidic connection by means of through holes 26 which pass through the wall of the first hollow stem 17. They are designed to contain a fluid chosen from compressible, for example nitrogen, and incompressible, constituted by one selectively for example from oil, HFC fluid (water and glycol) HFD, or HFDU (water-free synthetic fluids), etcetera. The latter, compared with oil, have a higher conductivity and heat capacity, facilitating the dissipation of heat.

Among the various components there are conveniently (in each embodiment of the device according to the invention) sealing gaskets known per se, such as oil scraper rings, rings of the O-ring type, or others. In order to simplify the drawing, such elements are only partly designated, by the reference number 44 and in Figure 1.

There is also an elastic ring, designated by 41 in Figures 1 and 3, made of elastically deformable plastic material, adapted to ensure a minimum elasticity useful to compensate volume variations in the magnetorheological fluid, particularly in the configuration shown in Figure 3. The elastic ring 41 is arranged in a groove on the annular element 19 at the interface with the third chamber 23.

A tank for the incompressible fluid, preferably with an independent control circuit, can be connected externally at the opening of a channel 27 (which is visible in the views of Figure 1 and Figure 2) formed in the end plate 14 of the jacket 11 and affected by the cavity of the second hollow stem 18. In particular, the channel 27 has two openings, at one of which the tank is connectable with a pump and at the other of which a one-way valve, or a pressure adjustment valve, is installed. These two elements and the hydraulic circuit that connects them to the channel 27 are not shown in order to simplify the drawing.

If the fluid is compressible, for example nitrogen, the two openings are closed by plugs or by one-way valves. As an alternative, only one or both of the openings can be connected to an external gas tank. In this case there can be an integrated one-way valve and a calibrated hole for the controlled discharge of the gas.

With at least one other hole 42, two in the example shown, provided on the head 16, it is possible to fill the first chamber 20 and/or the second chamber 21 with magnetorheological fluid. The holes are closed by plugs 43.

There is also another channel 28, which is visible in the view of Figure 3, which passes through the end plate 14 and the bushing 12, for the passage of an electrical connection to the electrical windings 13. In particular, said channel 28 is formed partially in the end plate 14 and partially in the bushing 12, where it ends with an inclined portion at a circular groove of the bushing 12, in which there is a first electrical winding 13.

In the channel 28 there can be a cable grommet, for bringing the electrical cables or strips from outside to the bushing 12 (as shown for the second embodiment), or, as shown, there can be a double connector 29, with an outermost portion, to which the electrical connection is brought and on which an electronic board and a processor (not shown in order to simplify the drawing) are mounted, and an innermost portion, which is closer to the first groove of the bushing 12 and to which the windings 13 are connected electrically. The connector 29, inserted in the two parts of the channel 28, prevents the rotation of the bushing 12 in the jacket 11.

In the lower part of the end plate 14 there are pockets 30 (at least one, which is visible in Figure 3) in order to accommodate, for example, pressure and temperature sensors designed to monitor these values in the magnetorheological fluid and connected to the electronic board. The same electronic board can be accommodated in one of these pockets.

The device 10 can be in fact provided with said sensors (optionally one or both), connected to a control system.

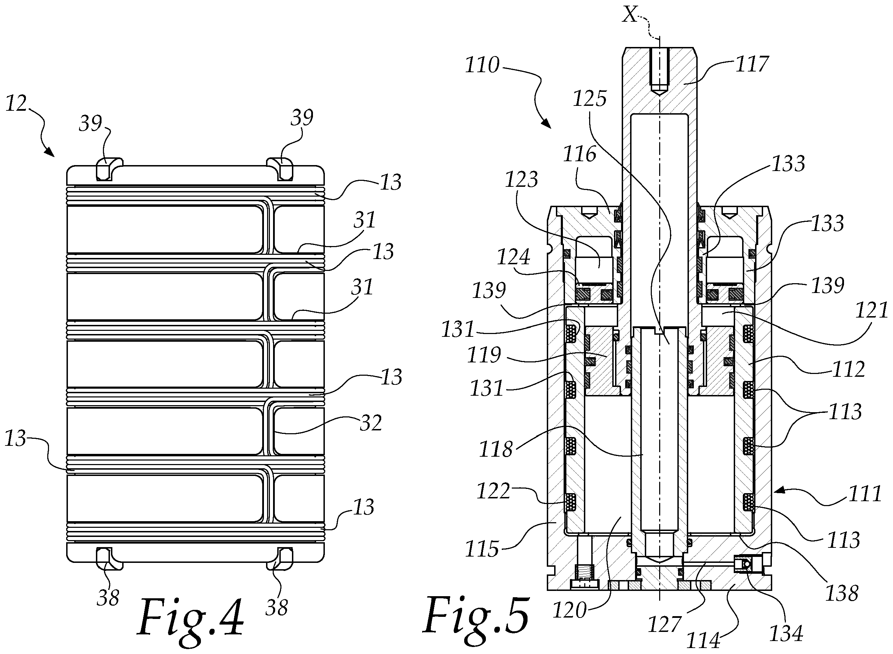

Figure 4 shows the bushing 12 with windings 13. It has, on the outer part, a series of parallel circular grooves 31 in which the electrical windings 13 are accommodated. The distances between the grooves, therefore between the windings, can be non-constant, in order to optimize the effectiveness of the device (obtaining a uniform magnetic flux along the interspace).

On the bushing 12 there is at least one passage 32 which affects transversely the circular grooves 31 to allow the passage of the cables or strips from one winding to the subsequent one and to also allow the return toward the connector 29. Optionally, another passage can be present in order to separate the return path of the cables. The passage 32 is indicated in Figure 4 and in the cross-section of Figure 3, where a dashed line is drawn in a simplified manner in order to indicate the presence of the cables. Their passage through the channel 28 is not shown, again for the sake of simplicity.

With reference to Figures 5, 6 and 7, the device according to the invention is generally designated by 110 in its second embodiment.

The main difference with respect to the previous embodiment described resides in that the fluid in the third chamber 123 can be constituted only by a compressible fluid, preferably nitrogen.

In a manner similar to what has been described for the first embodiment, the device 110, again of the type using magnetorheological fluid, comprises a jacket 111 and inside it and concentric thereto a tubular bushing 112, on the external surface of which there are electrical windings 113. The jacket 111 has a tubular portion 115 and an end plate 114 (which is monolithic) which closes it on one side, and is closed on the opposite side by a head 116, which is perforated for the passage of a first hollow stem 117.

The bushing 112 is provided at one end with first spacers 138, with which it rests on the end plate 114, and second spacers 139 on the opposite side.

The device 110 comprises the first hollow stem 117 and a second hollow stem 118. The two hollow stems 117 and 118 mutually cooperate in a telescopic manner: the first one 117 is adapted to protrude from the head 116 by translating on the second one 118, which extends from the end plate 114 within the bushing 112. The intensity of the electric current flowing through the electrical windings 113 can be modulated by means of an electric power supply both in inactive or setup steps and during the working stroke of the first hollow stem 117.

The jacket 111 and the bushing 112 are made of a material permeable to magnetic fields (for example, of the materials indicated for the previous embodiment). The head 116 may be made of non-magnetic material and, in a different constructive variation, the end plate 114 of the jacket also might be made of non-magnetic material.

The device 110 also comprises: an annular element 119, which is integral with the first hollow stem 117 and translates with it inside the bushing 112; a first chamber 120, which is extended around a portion of the second hollow stem 118, between the end plate 114 and the annular element 119, and is adapted to contain magnetorheological fluid; a second chamber 121, which is extended around a portion of the first hollow stem 117 and is in fluidic connection with the previous chamber by means of a calibrated interspace 122 between the bushing 112 and the jacket 111, as already described for the first embodiment. The interspace 122 can be crossed by the magnetorheological fluid, as previously described. Moreover, there is a third volume compensation chamber 123, which extends around a portion of the first hollow stem 117 and is separated from the second chamber 121 by means of a separation element 124, which is kept spaced from the edge of the bushing 112 by means of the second spacers 139.

In this embodiment, the annular element 119 separates transversely the first chamber 120 from the second chamber 121.

The second chamber 121 is comprised between the annular element 119 and the separation element 124, and the third chamber 123 is comprised between the head 116 and the separation element 124.

The third chamber 123 contains a compressible fluid, preferably nitrogen.

The device 110 comprises a fourth chamber 125 formed by the communicating cavities of the first hollow stem 117 and of the second hollow stem 118.

The separation element 124 has an annular shape and is installed at least around a portion of the first hollow stem 117, in this case also around a portion of the head 116 which extends around the portion of the first hollow stem 117. The separation element 124 is adapted to translate along the same axis X of translation of the first hollow stem 117, in a space substantially comprised between the perforated wall of the head 116 and the spacers 139.

As an alternative, the separation element may be constituted by a membrane (or the like), locked perimetrically to the tubular walls of the head 116 and extending along a portion of the outer surface of the first hollow stem 117 and along a portion of the internal surface of the jacket 111. The tubular extensions of the head are designated by 133 in Figure 5.

In this case also, the fourth chamber 125 can be filled with a fluid from the outside, since on the end plate 114 there is a channel 127 that affects the cavity of the second hollow stem 118, which can be connected to an external tank of fluid. This fluid is preferably a compressible gas and a one-way valve 134 is conveniently present proximate to the outward opening and remains closed during the operation of the device. There can also be a grub screw with a calibrated hole in order to ensure a gradual decompression. As an alternative, the fluid can be incompressible, as described for the previous embodiment, conveniently connected by an external pressure source.

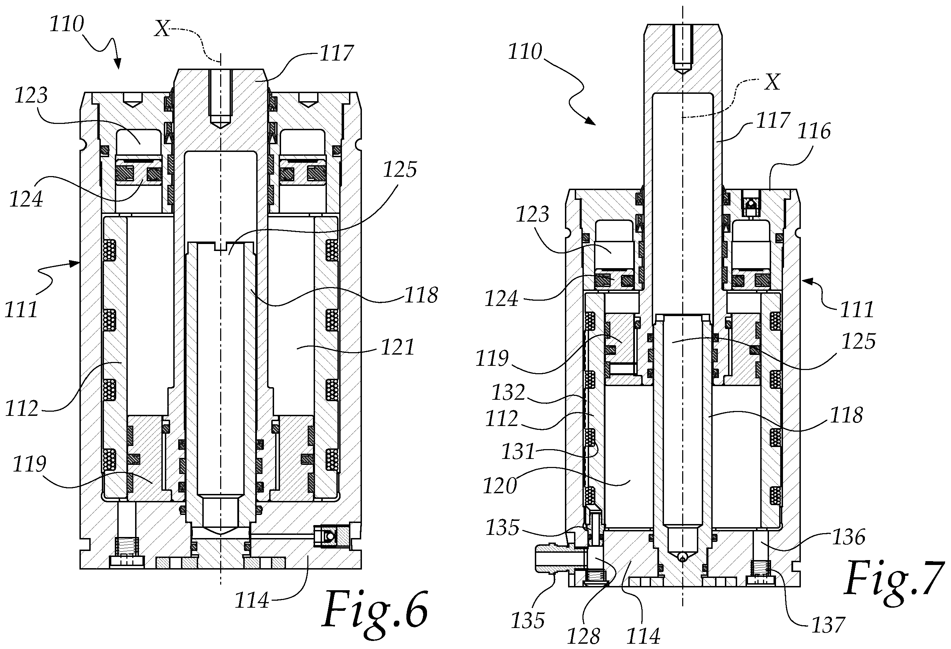

In the configuration shown in Figures 5 and 7, the first hollow stem 117 is in the maximum extension of the device and the volume of the first chamber 120 is maximum. In the configuration of Figure 6, the hollow stem 117 with the annular element 119 are at the bottom dead center and the volume of the second chamber 121 is maximum.

The lowering of the first stem 117 entails a volume reduction of the fourth chamber 125, with compression of the fluid. By setting a precompression in the fourth chamber 125, the rise of the first hollow stem 117 is obtained. The volume variation due to the retraction of the first stem 117 is compensated with the translation of the separation element 124.

There is also another channel 128 (visible in Figure 7) which passes through the end plate 114 and the bushing 112, for the passage of an electrical connection to the electrical windings 113. The connection can occur with the passage of cables from outside, substantially by using cable grommets 135. As an alternative, the connection can occur with one or more connectors, as shown for the previous embodiment of the device, with electronic board and processor. In this case also, there can be an electronic board, processors, temperature and pressure sensors connected to a control system, and pockets for the accommodation of these and other devices can be provided on the end plate 114.

Holes 136 for filling with magnetorheological fluid are provided on the end plate 114 and are conveniently closed by plugs 137.

The bushing 112 is similar to the bushing 12 and has, on the outer part, a series of parallel circular grooves 131 in which the electrical windings 113 are accommodated and a passage 132, visible in Figure 7. As before, the passages of the cables are simplified.

The operation of the actuation device, according to the invention, is as follows.

The interspace 22, 122 is crossed by the magnetorheological fluid, passing from the first chamber to the second one (and vice versa in the rise of the stem), and constitutes a duct of appropriate length (optionally increased with respect to known devices) affected by the magnetic field generated with the flow of electric current in the windings 13, 113. The permeability of the jacket and of the bushing to the magnetic field allows the lines of force B to close around the windings 13, 113, affecting the fluid in the interspace, as shown in Figure 1.

By virtue of a nominal diameter that is greater than the diameter of the first hollow stem 17, 117, the speed of the fluid through the interspace 22, 122 is lower than in the known solution with magnetorheological fluid around the stem, advantageously reducing the contribution of the viscous forces and limiting the problem of any cavitation phenomena. Furthermore, to avoid the occurrence of cavitation in the first chamber 20, 120 and in the second chamber 21, 121, due to viscous load drop in the interspace 22, 122, the third and fourth chambers 23, 25, in the first embodiment, and the third chamber 123 in the second embodiment must be preloaded under pressure, thus allowing the operation of the separation element 24, 124.

The viscosity of the fluid depends on the intensity of the current, and therefore the resisting force generated by the device can be modulated by varying the intensity of the current flowing through the windings and therefore the magnetic parameters, by means of the closed-loop (feedback) control system, depending on the parameters (pressure and temperature) measured by the sensors that are present on the end plate.

The position and the speed of descent and rise of the first hollow stem 17, 117 also can be modulated by varying the magnetic parameters, varying the resisting force offered by the device and controlled by the control system, again depending on the measured parameters.

In fact, in both of the embodiments, the flow of the current makes it possible to increase the viscosity of the magnetorheological fluid and therefore to increase the thrust of the first stem 17, 117.

In the first embodiment, the compensation of the difference in volume between the chambers, the first one 20 and the second one 21, due to the movement of the hollow stem 17, and the volume variations due to temperature variations, occurs due to an internal compensation chamber, i.e., the third chamber 23, the volume of which is modified with the translation of the separation element 24 and with the flow of the fluid to the fourth chamber 25 through the hole 26. A reduction of the volume of the first chamber 20, in the descent of the stem 17, requires an increase of the volume of the second chamber 21 accompanied by a reduction of the volume of the third chamber 23.

The rise of the stem 17 from the bottom dead center or from an intermediate position occurs by virtue of the precompression generated in the fourth chamber 25, with gas, or by pushing, with the pump, the incompressible fluid from outside. In the case of incompressible fluid, it is also, at least in part, caused to exit outward in the descent steps of the hollow stem 17, facilitating the dispersion of heat. In this respect, the emulsified water (HFC, HFD, HFDU, etcetera) ensures higher conductibility and heat capacity than oil, further facilitating heat dissipation.

In the second embodiment, the compensation of the difference in volume between the two chambers, the first one 120 and the second one 121, and the volume variations due to temperature variations, occurs again by virtue of the third chamber 123, the volume of which is modified with the translation of the separation element 124, preloaded with gas (for example nitrogen), which allows to obtain a preloading pressure also in the chambers in which the magnetorheological fluid is contained.

The rise of the first stem 117 occurs by virtue of the precompression in the fourth chamber 125.

The windings can be crossed by current also in inactive or setup steps (optionally also by modulating the intensity of the current) in order to heat the device and/or the magnetorheological fluid, avoiding work in temperature ranges that are critical for the viscosity of said fluid and avoiding transient steps due to viscosity variation.

It is evident that in both of the embodiments the possibility to act moment by moment on the intensity of the current flowing through the windings makes it possible to modify the viscosity of the magnetorheological fluid and therefore its speed through the interspace, obtaining an instantaneous control and modulation of the thrust and/or resisting force offered by the first stem during its stroke.

The device therefore can be controlled both in an active manner, for example in the rising stroke of the stem in order to perform a controlled extraction of a product from a die, controlling the rising speed (which otherwise would be controlled exclusively by the thrust of the fluid in the fourth chamber), and in a semi-active manner, for example in order to obtain a constant descent in the application to a sheet presser.

Since there are windings on a fixed part of the device, i.e., the bushing, these do not imply technical complications (they make it easy to connect to the electric power source) and the useful working length along which the fluid is magnetized is greater than in known devices, allowing the application of greater forces and at the same time helping to render the device compact.

The third chamber (for internal compensation) also helps to render the device compact and reduces the risk of leaks, since it does not require connections to the outside (as would occur with an external compensator).

The thrust force can be controlled and modulated also during discharge (which in other devices increases with the stroke), to the benefit of operator safety.

In practice it has been found that the invention achieves the intended aim and objects, providing an actuation device with low space occupation, capable of applying a thrust force that can be modulated instantaneously, as well as the speed and the rising position of the stem, allowing a suitable control of the movement of the parts of the machine and avoiding loads that are harmful for the mechanical elements and dangerous and damaging situations of instantaneous release of stored energy, while also overcoming the limitations of magnetorheological fluid devices of the known type.

The invention thus conceived is susceptible of numerous modifications and variations, all of which are within the scope of the appended claims; all the details may furthermore be replaced with other technically equivalent elements.

In practice, the materials used, as long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An actuation device, of the type using magnetorheological fluid, **characterized in that** it comprises at least the combination of:
- a jacket (11, 111),
- a tubular bushing (12, 112), which is internal to said jacket (11, 111) and is concentric thereto, electrical windings (13, 113) being present on the external wall of said bushing (12, 112), said jacket (11, 111) being closed at one end by an end plate (14, 114) and at the opposite end by a head (16, 116) which is perforated for the passage of:
- a first hollow stem (17, 117), adapted to protrude from said head (16, 116) by translating on
- a second hollow stem (18, 118), which extends from said end plate (14, 114) inside said bushing (12, 112), said first and second hollow stems (17, 117, 18, 118) cooperating with each other telescopically,
- an annular element (19, 119), which is integral with said first hollow stem (17, 117) and translates with it inside said bushing (12, 112),
- a first chamber (20, 120), which is extended around a portion of said second hollow stem (18, 118), between said end plate (14, 114) and said annular element (19, 119), and is adapted to contain said magnetorheological fluid,
- a second chamber (21, 121), which is extended around a portion of said first hollow stem (17, 117) and is in fluidic connection with said first chamber (20, 120) by means of an interspace (22, 122) between said bushing (12, 112) and said jacket (11, 111),
- a third volume compensation chamber (23, 123).

2. The device according to claim 1, **characterized in that** said third chamber (23, 123) is extended at least around a portion of said first hollow stem (17, 117), which is separated from said second chamber (21, 121) by means of a separation element (24, 124).

3. The device according to one or more of the preceding claims, **characterized in that** said annular element (19) separates transversely said first chamber (20) from said third chamber (23).

4. The device according to one or more of the preceding claims, **characterized in that** said annular element (119) separates transversely said first chamber (120) from said second chamber (121).

5. The device according to one or more of the preceding claims, **characterized in that** it comprises a fourth chamber (25, 125) which is formed by the communicating cavities of said first and second stems (17, 117, 18, 118).

6. The device according to one or more of the preceding claims, **characterized in that** said jacket (11, 111) and said bushing (12, 112) are made of a material that is permeable to magnetic fields.

7. The device according to one or more of the preceding claims, **characterized in that** said separator element (24, 124) is annular and is installed at least around a portion of said first hollow stem (17, 117).

8. The device according to one or more of the preceding claims, **characterized in that** said separator element (24, 124) is adapted to translate along a translation axis (X) of said first hollow stem (17, 117).

9. The device according to one or more of the preceding claims, **characterized in that** it is provided with a channel (28, 128) which passes through said end plate (14, 114) and said bushing (12, 112), for the passage of an electrical connection to said electrical windings (13, 113).

10. The device according to one or more of the preceding claims, **characterized in that** said bushing (12, 112) has, on its outer part, a series of parallel circular grooves (31, 131) in which said electrical windings (13, 113) are accommodated.

11. The device according to one or more of the preceding claims, **characterized in that** said second chamber (21) is comprised between said head (16) and said separator element (24) and said third chamber (23) is comprised between said annular element (19) and said separator element (24).

12. The device according to one or more of the preceding claims, **characterized in that** said third chamber (23) and said fourth chamber (25) are in fluidic connection by means of at least one through hole (26) which passes through the wall of said first hollow stem (17) and are designed to contain a fluid chosen from incompressible and compressible.

13. The device according to one or more of the preceding claims, **characterized in that** said incompressible fluid is constituted by a fluid chosen from oil, HFC, HFD, HFDU.

14. The device according to one or more of the preceding claims, **characterized in that** said second chamber (121) is comprised between said annular element (119) and said separator element (124) and said third chamber (123) is comprised between said head (116) and said separator element (124).

15. The device according to one or more of the preceding claims, **characterized in that** said third chamber (123) contains a compressible fluid.

16. The device according to one or more of the preceding claims, **characterized in that** it comprises at least one pressure sensor and/or at least one temperature sensor, which are connected to a control system.

17. The device according to one or more of the preceding claims, **characterized in that** the intensity of the electric current that flows through said electrical windings (13, 113) can be modulated by means of an electrical power supply.
